# EUROPEAN PATENT APPLICATION

(11) **EP 4 745 566 A1**
(43) Date of publication of application: **20.05.2026**
(21) Application number: 25207510.6
(22) Date of filing: 08.10.2025
(51) Int. Cl.: G01N 27/02

(54) **SENSOR DIE**

(30) Priority: 14.11.2024 US 202418948106
(71) Applicant: Honeywell International Inc., Charlotte, NC 28202 (US)
(72) Inventor: BECK, Scott Edward, Charlotte, 28202 (US); WANG, Yong-Fa Alan, Charlotte, 28202 (US); FOSTER, Philip C., Charlotte, 28202 (US); PHAM, Thuy-Doan Thi, Charlotte, 28202 (US); XU, Miao, Charlotte, 28202 (US)
(74) Representative: Haseltine Lake Kempner LLP

(57) **Abstract**

Apparatuses, systems, and methods are provided for sensor dies, particularly silicon-based polymer sensor dies. A sensor die may be configured, via a plurality of interdigitated electrode (IDEs) and a sensing layer, to measure variations in impedance to detect presence of a material (e.g., a leakage from a battery). The sensor die may comprise a substrate comprised of a silicon oxide on silicon wafer, the plurality of IDEs (e.g., comprised of a metal) disposed proximate to a surface of the substrate, one or more retaining rings defining one or more regions therebetween configured to contain at least a volume of the material, and the sensing layer (e.g., comprised of solid polymer electrolyte (SPE)) disposed proximate to the plurality of IDEs.

## Description

### FIELD OF THE INVENTION

Embodiments of the present disclosure generally relate to sensor dies, particularly to silicon-based solid polymer electrolyte sensor dies.

### BACKGROUND

Some sensor dies comprise interdigitated electrodes (IDEs) disposed on glass substrates. Applicant has identified many technical challenges and difficulties associated with such sensor dies. Through applied effort, ingenuity, and innovation, many of these identified problems have been solved by developing solutions that are included in embodiments of the present disclosure, many examples of which are described in detail herein.

### BRIEF SUMMARY

Various example embodiments described herein relate to sensor dies, particularly to silicon-based solid polymer electrolyte sensor dies.

In accordance with various embodiments of the present disclosure, an apparatus for detecting a vapor is provided. The apparatus comprising: (i) a substrate; (ii) a plurality of interdigitated electrodes (IDEs) comprised of a metal disposed proximate to a surface of the substrate; and (iii) a solid polymer electrolyte (SPE) sensing layer disposed proximate to the plurality of IDEs.

In some embodiments, the substrate is comprised of bulk silicon with a thin film of silicon oxide.

In some embodiments, the apparatus further comprises one or more retaining rings defining one or more regions therebetween configured to contain at least a volume of SPE.

In some embodiments, the plurality of IDEs comprises one or more electrodes of a first width, and wherein the one or more electrodes of the first width are spaced from one another by a distance equaling the first width.

In some embodiments, the plurality of IDEs comprises one or more electrodes of a second width, wherein the one or more electrodes of the second width are spaced from one another by a distance equaling a first width, and wherein the first width and the second width are different.

In some embodiments, the plurality of IDEs comprises one or more electrodes that are in electrical connection with one or more buses, wherein the one or more buses are configured to substantially surround at least an area comprising the one or more electrodes.

In some embodiments, the apparatus is configured to measure, via the plurality of IDEs and the sensing layer, variation in impedance to detect presence of the vapor.

In accordance with various embodiments of the present disclosure, a system for is provided. The system comprising: (i) a lithium-ion battery; and (ii) a sensor die for detecting a vapor. The sensor die comprising: (a) a substrate; (b) a plurality of interdigitated electrodes (IDEs) comprised of a metal disposed proximate to a surface of the substrate; and (c) a solid polymer electrolyte (SPE) sensing layer disposed proximate to the plurality of IDEs.

In some examples, the substrate is comprised of bulk silicon with a thin film of silicon oxide.

In some embodiments, the sensor die further comprises one or more retaining rings defining one or more regions therebetween configured to contain at least a volume of SPE.

In some examples, the plurality of IDEs comprises one or more electrodes of a first width, and wherein the one or more electrodes of the first width are spaced from one another by a distance equaling the first width.

In some examples, the plurality of IDEs comprises one or more electrodes of a second width, wherein the one or more electrodes of the second width are spaced from one another by a distance equaling a first width, wherein the first width and the second width are different.

In some examples, the plurality of IDEs comprises one or more electrodes that are in electrical connection with one or more buses, wherein the one or more buses are configured to substantially surround at least an area comprising the one or more electrodes.

In some examples, the sensor die is configured, via the plurality of IDEs and the sensing layer, to measure variation in impedance to detect presence of the vapor.

In accordance with various embodiments of the present disclosure, a method for constructing an apparatus for detecting a vapor is provided. The method comprising: (i) depositing a plurality of interdigitated electrodes (IDEs) comprised of a metal onto a surface of a substrate; and (ii) depositing a sensing layer comprised of solid polymer electrolyte (SPE) proximate to the plurality of IDE such that the sensing layer covers at least the plurality of IDEs.

In some embodiments, the substrate is comprised of bulk silicon with a thin film of silicon oxide.

In some embodiments, the method further comprises fabricating one or more retaining rings defining one or more regions therebetween configured to contain at least a volume of SPE.

In some embodiments, the plurality of IDEs comprises one or more electrodes of a first width, and wherein the one or more electrodes of the first width are spaced from one another by a distance equaling the first width.

In some embodiments, the plurality of IDEs comprises one or more electrodes that are in electrical connection with one or more buses, wherein the one or more buses are configured to substantially surround at least an area comprising the one or more electrodes.

In some embodiments, the method further comprises configuring a sensor die to measure variation in impedance, via the plurality of IDEs and the sensing layer, to detect presence of the vapor.

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1A illustrates a first perspective view of a sensor die in accordance with one or more embodiments of the present disclosure;
FIG. 1B illustrates a second perspective view of the sensor die of FIG. 1A;
FIG. 2 illustrates a cross-sectional view of the sensor die of FIG. 1B;
FIG. 3A illustrates a top-down view of a sensor die in accordance with one or more embodiments of the present disclosure;
FIG. 3B illustrates a top-down view of a sensor die in accordance with one or more embodiments of the present disclosure;
FIG. 4 illustrates a top-down view of a sensor die with an exemplary boundary in accordance with one or more embodiments of the present disclosure;
FIG. 5A illustrates a top-down view of a portion of a sensor die in accordance with one or more embodiments of the present disclosure;
FIG. 5B illustrates a top-down view of a portion of a sensor die in accordance with one or more embodiments of the present disclosure;
FIG. 5C illustrates a top-down view of a portion of a sensor die in accordance with one or more embodiments of the present disclosure; and
FIG. 6 illustrates a flowchart of an exemplary method of constructing sensor die in accordance with one or more embodiments of the present disclosure.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," "bottom," "left," "right," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The phrases "in one example," "according to one example," "in some examples," and the like generally mean that the particular feature, structure, or characteristic following the phrase may be included in at least one example of the present disclosure and may be included in more than one example of the present disclosure (importantly, such phrases do not necessarily refer to the same example).

If the specification states a component or feature "may," "can," "could," "should," "would," "preferably," "possibly," "typically," "optionally," "for example," "as an example," "in some examples," "often," or "might" (or other such language) be included or have a characteristic, that specific component or feature is not required to be included or to have the characteristic. Such component or feature may be optionally included in some examples, or it may be excluded.

The word "example" or "exemplary" is used herein to mean "serving as an example, instance, or illustration." Any implementation described herein as "example" or "exemplary" is not necessarily to be construed as preferred or advantageous over other implementations.

The term "electrically coupled," "electrically coupling," "electrically couple," "electrically connected," "electrically connecting," "electrically connect," "in communication with," or "in electronic communication with" in the present disclosure refers to two or more elements or components being connected through wired means and/or wireless means, such that signals, electrical voltage/current, data and/or information may be transmitted to and/or received from these elements or components.

The term "component" may refer to an article, a device, or an apparatus that may comprise one or more surfaces, portions, layers and/or elements. For example, an example component may comprise one or more substrates that may provide underlying layer(s) for the component and may comprise one or more elements that may form part of and/or are disposed on top of the substrate. In the present disclosure, the term "element" may refer to an article, a device, or an apparatus that may provide one or more functionalities.

Embodiments of the present disclosure provide apparatuses, systems, and methods for sensor dies. Various embodiments provide for silicon-based solid polymer electrolyte sensor dies.

In various embodiments, a sensor die may be for detecting a vapor. A sensor die as described herein may be used in various applications. In an exemplary application, a battery of an electric vehicle may leak, which may generate a vapor. A sensor die may be used for detecting the vapor generated or originating from a battery.

In various embodiments, a sensor die may include a substrate, a plurality of electrodes (e.g., interdigitated electrodes), one or more contact pads, one or more areas comprising polymer, and/or other components. The substrate may be a silicon-based substrate comprised of silicon oxide on silicon. The one or more contact pads are configured to be in electrically connected to or in electrical connection with one or more external devices so that a measurement with the sensor die may be provided to the external device. Examples of external devices include printed circuit board assemblies (PCBAs), processors, and/or the like. In some examples, a solid polymer electrolyte is used in combination with the interdigitated electrodes (IDEs) for measuring one or more properties, such as impedance or change in impedance. Measurements of impedance or variations of impedance may indicate presence of a vapor or other material, such as the presence of a leak in a battery.

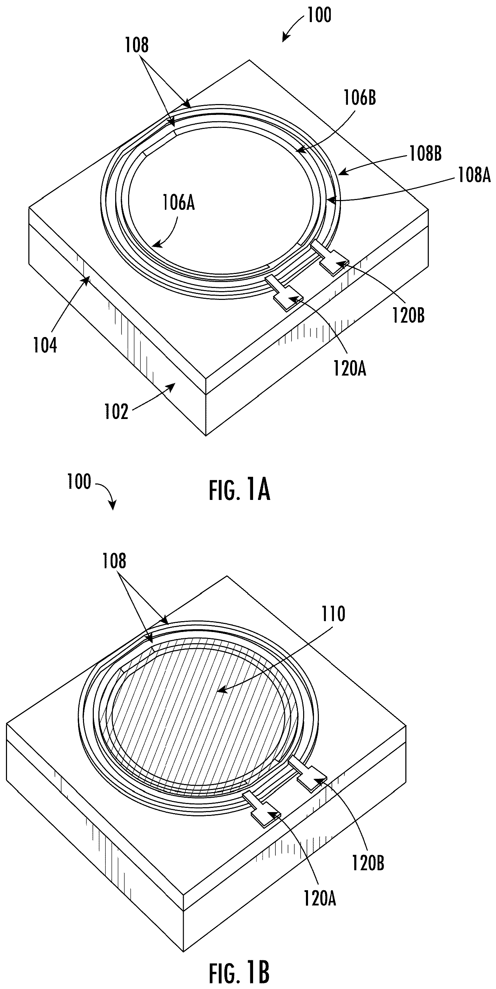

FIG. 1A illustrates a first perspective view of a sensor die 100 in accordance with one or more embodiments of the present disclosure. The first perspective view illustrated in FIG. 1A of sensor die 100 omits a sensing layer 110 comprised of solid polymer electrolyte (SPE), which is illustrated in FIG. 1B. As illustrated in FIG. 1, the sensor die 100 comprises a first substrate layer 102, a second substrate layer 104, one or more buses 106 (e.g., a first bus 106A and second bus 106B), and one or more retaining rings 108 (e.g., a first retaining ring 108A and second retaining ring 108B). Although the example of FIG. 1A illustrates one first substrate layer 102, one second substrate layer 104, two buses 106, two retaining rings 108, and one region for a sensing layer 110, it will be appreciated that any number of such components may be present in various embodiments of a sensor die 100. For example, another embodiment of the present disclosure omits the retaining ring(s) 108.

The first substrate layer 102 may be underneath a second substrate layer 104. The first substrate layer 102 and the second substrate layer 104 may, in combination, be referred to as "the substrate" 102+104. The substrate 102+104 may be comprised of various materials, and the first substrate layer 102 may be a different material than the second substrate layer 104. For example, the substrate 102+104 may be comprised of insulating materials, including: glass, Kapton, quartz, composite epoxy material(s), ceramic(s) such as alumina, polytetrafluoroethylene (PTFE), and/or other insulating materials. In some examples, the substrate may be comprised of a silicon-based material. For example, the substrate 102+104 may be comprised of a film of silicon oxide (e.g., SiO2) on silicon (Si) with the first substrate layer 102 comprised of bulk silicon and the second substrate layer 104 comprised of a silicon oxide film. The bulk silicon may be independent of dopant levels. In some examples, the substrate may be an Si/SiO2 wafer. In various embodiments, the first substrate layer 102 may be a metal or semiconductor layer with second substrate layer being an insulating or dielectric layer. In various embodiments, the substrate 102+104 may be flexible and comprised of a single material (e.g., Kapton), which might be referred to a single substrate layer. Alternatively, there may be a first substrate layer 102 of a first material and the second substrate layer 104 may be a film or foil (e.g., with a dielectric on the film). The substrate may be configured for the sensor die 100 to perform various operations and measurements, such as measurements of impedance and/or variations of impedance.

The one or more buses 106 may be configured in various shapes that extend from one or more contact pads 120. For example, the one or more buses 106 may extend from one or more contact pads 120 and form at least a portion of a perimeter surrounding a plurality of IDEs. In some examples, the one or more buses 106 may include a first bus 106A and a second bus 106B that are configured in a semi-circular shape. Thus the two corresponding buses 106A, 106B form a substantially circular shape. The first bus 106A may extend from or be electrically connected to a first contact pad 120A. The second bus 106B may extend from or be electrically connected to a second contact pad 120B. In various examples, there may be one or more gaps in or between the one or more buses 106. For example, the substantially circular shape of bus 106A and 106B may include one or more gaps. The one or more buses 106 may be comprised of metal, such as gold (Au), platinum (Pt), and/or other metal(s). The metal of the one or more buses 106 may be deposited (e.g., photolithographically defined).

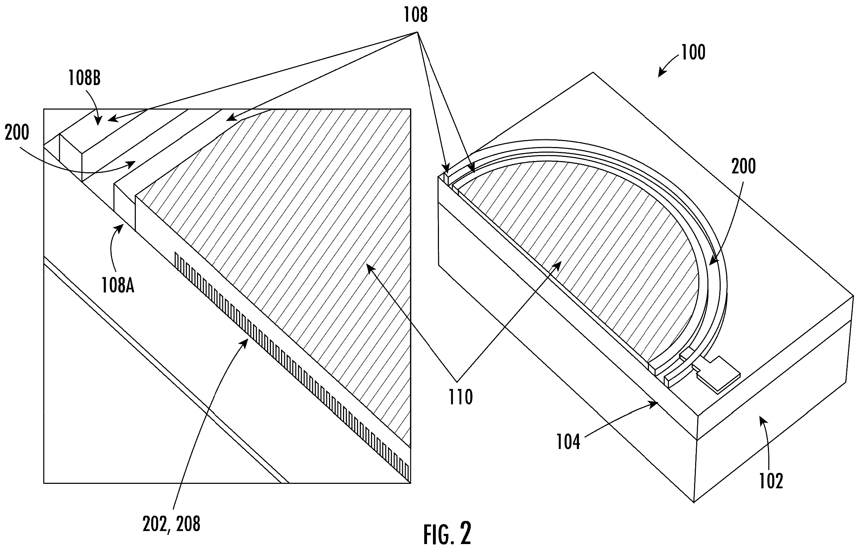

The one or more retaining rings 108 are variously shaped and configured. For example, the one or more retaining rings 108 may be substantially rounded and/or of other shapes. In the example of FIG. 1A, two retaining rings of a first retaining ring 108A and a second retaining ring 108B are illustrated. The first retaining ring 108A is inside or internal to the second retaining ring 108B. The distance between the first retaining ring 108A and the second retaining ring 108B forms a gap 200 (illustrated in FIG. 2). The gap 200 may be referred to as a pool or an outer pool. In various embodiments, constructing a sensor die 100 may include depositing a sensing layer 110 comprised of solid polymer electrolyte (SPE) that may be a liquid or viscous. During this deposition, the SPE may be deposited into an internal pool bounded by the internal first retaining ring 108A and may spread to fill this inner pool. To the extent there is any overflow from the deposition, the gap 200 between the internal first retaining ring 108A and outer second retaining ring 108B forms an outer pool where any excess SPE (or other type of electrolyte) may overflow the internal pool formed by the first retaining ring 108A. Thus the gap 200 or outer pool may retain any additional electrolyte that overflows the internal pool, which prevents the electrolyte from coating other portions of the sensor die 100 (e.g., the contact pads 120).

The one or more retaining rings 108 may be comprised of polyimide, SU-8 (a negative photoresist material), and/or other materials. The one or more retaining rings 108 may be defined via photolithography, etching, and/or other techniques. For example, one or more polyimide retaining rings 108 may be defined via: (i) deposition of a layer of polyimide over at least a portion of a surface of the sensor die 100; (ii) deposition of a layer of photoresist over the layer of polyimide; (iii) photolithography of the photoresist to define region(s) (e.g., two substantially concentric rings) at which polyimide is desired; (iv) polyimide etching to remove at least some (e.g., all) of the polyimide layer not covered by the remaining photoresist; (v) removal of the photoresist covering the polyimide retaining rings; and/or other steps.

Alternatively, various embodiments do not include retaining rings. For example, various embodiments may deposit SPE (or another electrolyte) in a manner where the SPE does not spread or is not so viscous to have overflow. An example of such as deposition operation is with printing. Such embodiments may omit the retaining rings 108.

FIG. 1B illustrates a second perspective view of the sensor die 100 of FIG. 1A. FIG. 1B illustrates a sensing layer 110 comprised of solid polymer electrolyte (SPE). The SPE may be variously shaped and/or configured to conform to the shape of the underlying interdigitated electrodes (IDEs). The SPE may be deposited such that it forms a substantially circular thin film. An end and/or base of the SPE may extend past the one or more buses 106 such that the one or more buses 106 (and the plurality of IDEs) are covered by the SPE. In some examples, the SPE is configured to operate, in combination with the plurality of IDEs, to provide for measurement of one or more properties, such as impedance and/or variations of impedance.

The SPE may be deposited onto the sensor die 100. The SPE may be an ink and deposition may be via inkjet printing, aerosol printing, and/or other techniques. In some examples, deposition of SPE may rely on an ink with a viscosity outside of an operating range of one or more respective printing techniques, which may result in challenges in printing a precise amount of ink. In such examples with excess and/or overflowing ink, the SPE, and/or other materials may be captured by one or more pools described herein. Such as the pool defined by in a gap between two or more retaining rings 108.

FIG. 2 illustrates a cross-sectional view of the sensor die 100 of FIG. 1B. In the example of FIG. 2, the sensor die 100 comprises the first substrate layer 102, the second substrate layer 104, a first retaining ring 108A and a second retaining ring 108B forming a gap 200 or pool, a sensing layer 110 of solid polymer electrolyte (SPE), and a plurality of interdigitated electrodes (IDEs) (e.g., 202, 208). The IDEs 202 or 208 are further described herein. Although the sensor die 100 of FIG. 2 illustrates one first substrate layer 102, one second substrate layer 104, two retaining rings 108, one sensing layer 110 of SPE, one gap 200 or pool, and a plurality of IDEs 202, 208, any number of such components may be present in a sensor die 100.

The sensing layer 110 of SPE may be variously shaped and/or configured. For example, the SPE may be deposited such that it forms a substantially cylindrical shape or film. The height of a substantially cylindrical shape being smaller than the diameter of the substantially cylindrical shape. In various examples, the shape may be defined by a retaining ring 108 (e.g., a first retaining ring 108A). The SPE may extend past the one or more buses 106 such that the one or more buses 106 (and the plurality of IDEs 202, 208 surrounded by the buses 106) are covered by the SPE. In some examples, the SPE is configured to operate, in combination with the plurality of IDEs 202, 208, to measure one or more properties, such as impedance and/or variations of impedance.

In some embodiments, a polymer layer is added above the electrode layers (e.g., 202, 208) in an opening above the IDE structure and additionally in open regions of the sensor die 100 that may serve as additional retaining pools for material deposited above the IDE structure that may overflow the IDE area. Such retaining pools may contain the extra volume of material without impacting electrical characteristics of the sensor die 100 and/or a device comprising the sensor die 100.

The plurality of IDEs 202, 208 may be deposited on the substrate prior to the deposition of the SPE. The plurality of IDEs and various configurations thereof are further described herein.

In some embodiments, the plurality of IDEs 202, 208, the one or more buses 106, the contact pads 120, and the one or more elongated paths and/or portions (e.g., lead-outs) between the buses 106 and the contact pads 120 may be comprised of the same layer of deposited metal (e.g., Au, Pt, and/or other metal(s)). This layer of metal may be photolithographically defined. For example, a layer of metal may be deposited on a sensor die, a layer of photoresist may be deposited onto the layer of metal and then partially removed to define desired regions (e.g., defining a plurality of IDEs, one or more lead-outs, one or more buses, and/or one or more contact pads), the layer of metal may be etched such that only areas with remaining photoresist are not etched away, and/or the remaining photoresist may be removed.

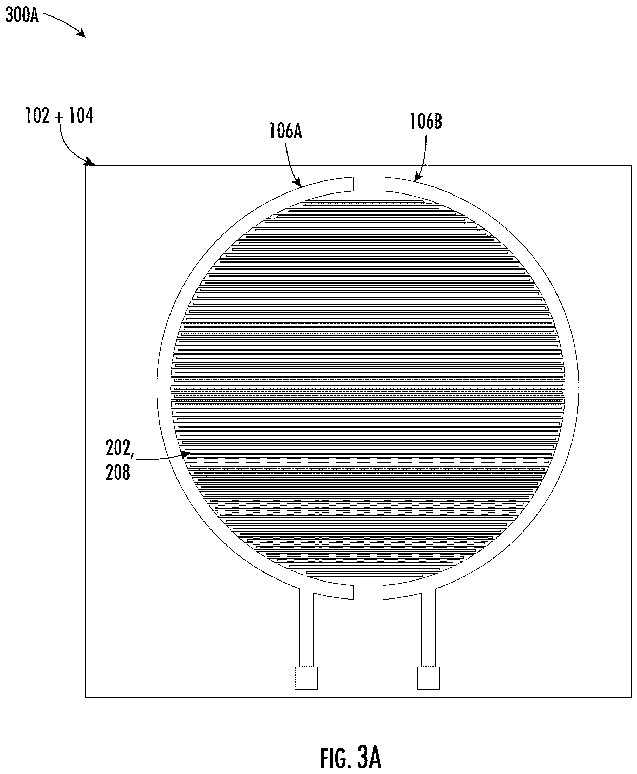

FIG. 3A illustrates a top-down view of a sensor die 300A in accordance with one or more embodiments of the present disclosure. The sensor die 300A may be configured to measure impedance and/or variation in impedance, for example, to detect presence of a vapor. The sensor die 300A comprises a substrate 102+104, one or more buses 106, and a plurality of interdigitated electrodes (IDEs) 202. As illustrated, the one or more busses 106 include a first bus 106A and a second bus 106B. The sensor die 300A may include other components not illustrated.

As described herein, the one or more buses 106 may be variously shaped. In FIG. 3A, a first bus 106A and a second bus 106B are each configured with a semi-circular shape to collectively form a circular shape. This circular shape has one or more gaps between the first bus 106A and the second bus 106B. The two substantially semi-circular buses 106 each extend from one or more contact pads via one or more elongated paths and/or portions.

The plurality of IDEs 202, 208 may comprise a first plurality of elongated electrodes 202 and a second plurality of elongated electrodes 208. The first plurality of elongated electrodes 202 are electrically connected to and extend from the first bus 106A. The second plurality of elongated electrodes 208 are electrically connected to and extend from the second bus 106B. The first plurality of electrodes 202 and/or the second plurality of electrodes 208 may extend from one or more interior edges of the one or more respective buses 106, wherein an "interior edge" of the respective bus 106 may be defined as an edge closer in proximity to an opposite bus (e.g., 106B) of the one or more buses 106 (e.g., 106A). The first plurality of electrodes 202 and the second plurality of electrodes 208 each respectively extend from opposite buses and are configured in an interlocking arrangement such that they form the plurality of interdigitated electrodes 202, 208. The electrodes of the plurality of IDEs 202, 208 may be comprised of metal, such as a metal film. The metal film may be a gold film, platinum film, and/or other type of metal film.

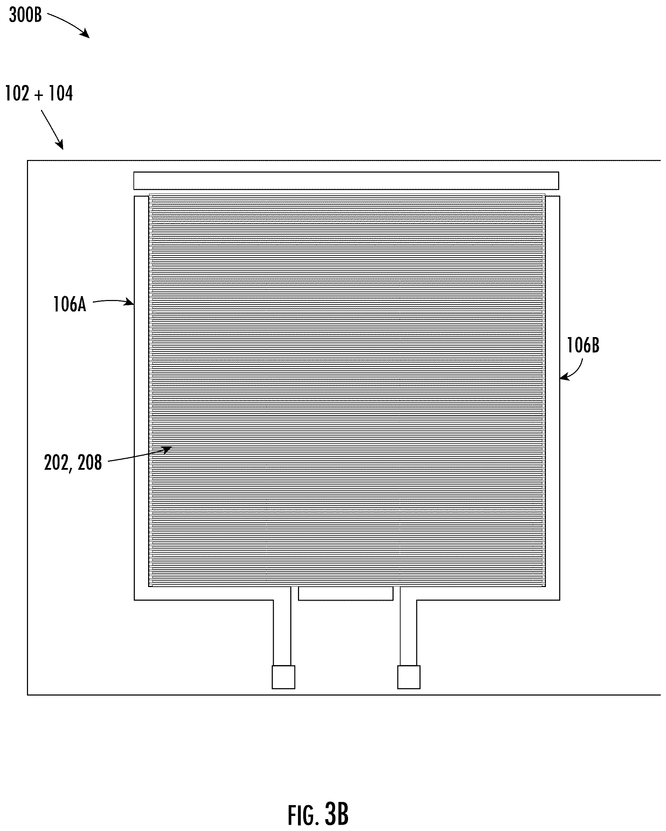

FIG. 3B illustrates a top-down view of a sensor die 300B in accordance with one or more embodiments of the present disclosure. The sensor die 300B may be configured to measure impedance and/or variation(s) in impedance, for example, to detect presence of a vapor. The sensor die 300B comprises a substrate 102+104, one or more buses 106, and a plurality of interdigitated electrodes (IDEs) 202, 208. As illustrated, the one or more busses 106 include a first bus 106A and a second bus 106B. The sensor die 300B may include other components not illustrated.

As described herein, the one or more buses 106 may be variously shaped. In FIG. 3B, a first bus 106A and a second but 106B are each configured to extend from a respective contact pad to form at least a portion of a perimeter surrounding the plurality of IDEs 202, 208. The first bus 106A and the second bus 106B are substantially semi-quadrilateral, such that the two corresponding buses form a substantially quadrilateral shape (e.g., a rectangle, a square, etc.). This substantially quadrilateral shape may comprise one or more gaps between the one or more buses 106 and/or other portions of the sensor die 300B.

The plurality of IDEs 202, 208 may comprise a first plurality of elongated electrodes 202 and a second plurality of elongated electrodes 208. The first plurality of elongated electrodes 202 are electrically connected to and extend from the first bus 106A. The second plurality of elongated electrodes 208 are electrically connected to and extend from the second bus 106B. The first plurality of electrodes 202 and/or the second plurality of electrodes 208 may extend from one or more interior edges of the one or more respective buses 106, be configured in an interlocking arrangement, and be comprised of metal as described herein.

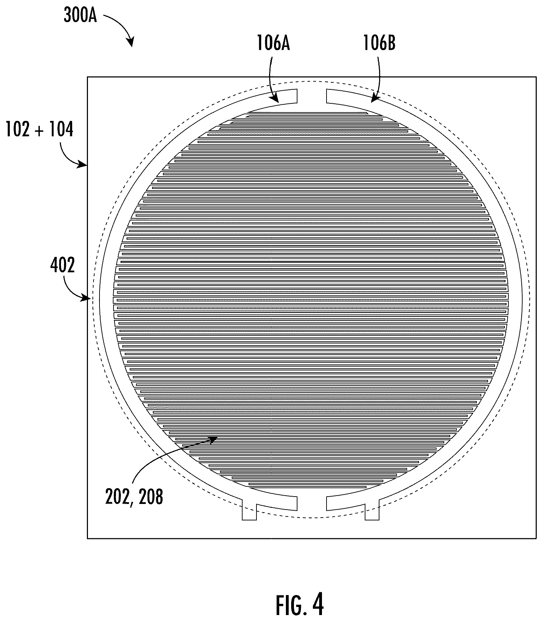

FIG. 4 illustrates a top-down view of a sensor die 400 with a boundary 402 in accordance with one or more embodiments of the present disclosure. The sensor die 400 comprises a substrate 102+104, two buses 106A, 106B, and a plurality of interdigitated electrodes 202, 208. The exemplary boundary 402 surrounds these components.

The boundary 402 defines a boundary 402 with an exemplary shape of a circle that surrounds the illustrated components of sensor die 400 and is substantially the same or a similar shape as the combined buses 106. For example, for a sensor die 400 having two semi-circular buses 106A, 106B, the boundary 402 is a circle. The boundary 402 may define a region on which SPE may be present. During construction of the sensor die 400, the boundary 402 may define the region where SPE or another electrolyte is deposited.

The sensor die 400 may include other components not illustrated. Additionally or alternatively, and as illustrated in the embodiment of FIG. 4, a sensor die 400 may omit retaining ring(s) 108 described herein. Alternatively, in some embodiments, the boundary 402 may define a region that is inside a first retaining ring 108.

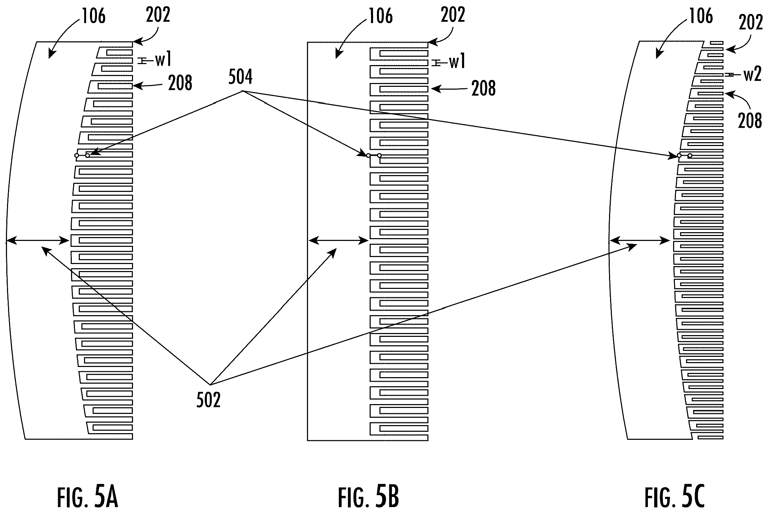

FIG. 5A illustrates a top-down view of a portion of a sensor die in accordance with one or more embodiments of the present disclosure. In various embodiments, the portion of a sensor die illustrated in FIG. 5A is a portion of the sensor die illustrated in FIG. 3A. The portion of the sensor die illustrated in FIG. 5A comprises a portion of a substantially semi-circular bus 106 (e.g., 106A) and a portion of a first plurality of IDEs 202 and a portion of a second plurality of IDEs 208. The semi-circular bus 106 may be of a width 502, which may be a consistent width. The first plurality of IDEs 202 are electrically connected to the bus 106. In various embodiments, the first plurality of IDEs 202 may include a portion of one or more of the first plurality of IDEs 202 overlaid onto the bus 106 and/or electrically connected to the bus 106 at the end or edge of an IDE 202. The second plurality of IDEs 208 are arranged in an interdigitated or interlocking arrangement with the first plurality of IDEs 202. The second plurality of IDEs 208 are not electrically connected to the bus 106 illustrated. Instead, and as described herein, the second plurality of IDEs 208 are electrically connected to a corresponding bus (e.g., 106B) not illustrated in FIG. 5A. Each of the second plurality of IDEs 208 is spaced at a distance 504 from the bus 106. The distance 504 is a consistent distance separating the second plurality of IDEs from the bus 106 (and the consistent distance analogously separate the first plurality of IDSs from a second bus 106B not illustrated). The spacing of the distance 504 may allow for additional impedance changes when a vapor is present. It will be appreciated even though not illustrated, that the first plurality of IDEs 202 are also spaced with an analogous distance from the second bus (e.g., 106B).

The individual electrodes of the plurality of IDEs 202,208 may each have a first width W1. Each of the individual electrodes may be spaced apart each adjacent electrode by the same width W1. Additionally or alternatively, adjacent electrodes may be different lengths.

FIG. 5B illustrates a top-down view of a portion of a sensor die in accordance with one or more embodiments of the present disclosure. In various embodiments, the portion of a sensor die illustrated in FIG. 5B is a portion of the sensor die illustrated in FIG. 3B. The portion of the sensor die shown in FIG. 5B comprises a portion of a substantially semi-quadrilateral bus 106 and a portion of a first plurality of IDEs 202 and a portion of a second plurality of IDEs 208. The bus 106 may be of a width 502, which may be a consistent width. The first plurality of IDEs 202 are electrically connected to the bus 106. In various embodiments, the first plurality of IDEs 202 may include a portion of one or more of the first plurality of IDEs 202 overlaid onto the bus 106 and/or electrically connected to the bus 106 at the end or edge of an IDE 202. The second plurality of IDEs 208 are arranged in an interdigitated or interlocking arrangement with the first plurality of IDEs 202. The second plurality of IDEs 208 are not electrically connected to the bus 106 illustrated. Instead, and as described herein, the second plurality of IDEs 208 are electrically connected to a corresponding bus (e.g., 106B) not illustrated in FIG. 5A. Each of the second plurality of IDEs 208 is spaced at a distance 504 from the bus 106. It will be appreciated even though not illustrated, that the first plurality of IDEs 202 are also spaced with an analogous distance from the second bus (e.g., 106B).

FIG. 5C illustrates a top-down view of a portion of a sensor die in accordance with one or more embodiments of the present disclosure. In various embodiments, the portion of a sensor die illustrated in FIG. 5C is a portion of the sensor die illustrated in FIG. 4. The portion of the sense die shown in FIG. 5C comprises a portion of a substantially semi-circular bus 106 (e.g., 106A) and a portion of a first plurality of IDEs 202 and a portion of a second plurality of IDEs 208. The plurality of electrodes 202, 208 of FIG. 5C are similar to those of FIG. 5A, but the plurality of IDEs 202, 208 of FIG. 5C may each have a second width W2. The second width W2 may be smaller than the first width W1. Each of the individual electrodes may be spaced apart each adjacent electrode by the second width W1.

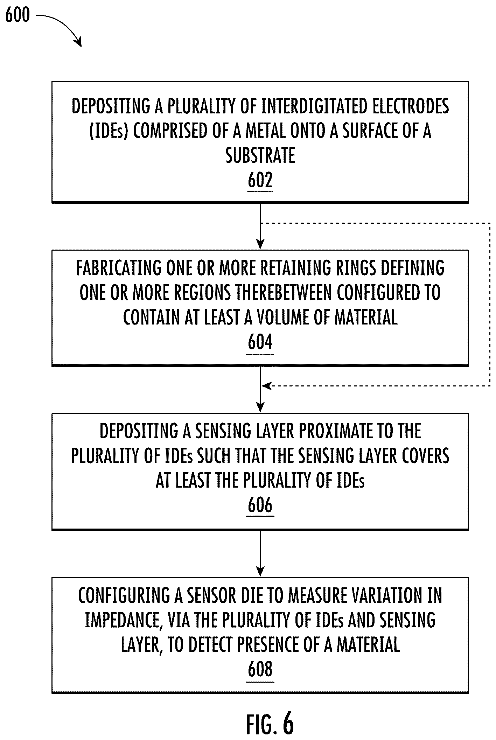

FIG. 6 illustrates a flowchart of an exemplary method 600 of constructing sensor die in accordance with one or more embodiments of the present disclosure. In some examples, the sensor die may be a silicon die, such as a silicon based SPE sensor die.

At step/operation 602, at least one interdigitated electrode (IDE) 202, 208 may be fabricated onto a surface of a substrate 102+104. In some examples, the at least one interdigitated electrode 202, 208 may be comprised of metal film. In some examples, the metal film may be comprised of gold, platinum, and/or other materials. The at least one IDE 202, 208 may comprise one or more electrodes 202, 208 of a first width spaced from one another by a distance equaling the first width. Alternatively or additionally, the at least one IDE 202, 208 may comprise one or more electrodes of a second width spaced from one another by a distance equaling the first width. The at least one IDE 202, 208 comprises one or more electrodes in electrical connection with one or more buses 106 (e.g., 106A or 106B). In some examples, the one or more buses 106 are configured to substantially surround at least an area comprising the one or more electrodes 202, 208.

At step/operation 604, one or more retaining rings defining one or more regions therebetween configured to contain at least a volume of material may be fabricated. One or more retaining rings 108 may be fabricated to define a volume or region. In a subsequent step/operation, SPE or another electrolyte may be deposited into this volume, which will allow the SPE or electrolyte to flow into the volume and fill the volume.

In various embodiments, step/operation 604 may be omitted. For example, in embodiments that do not require one or more retaining rings 108 to define a volume to contain SPE or an electrolyte as it is deposited, then retaining ring(s) 108 may be omitted and step/operation 604 may be omitted. In such embodiments, step/operation 606 may follow step/operation 602.

At step/operation 606, a sensing layer may be disposed proximate to the at least one IDE 202, 208, such that the sensing layer covers at least the at least one interdigitated electrode. In some examples, the sensing layer 110 is a comprised of SPE and/or other materials.

At step/operation 608, the sensor die is configured to measure variation in impedance, via the plurality of IDEs 202, 208 and sensing layer 110, that detect the present of a material. In various embodiments, the material may be vapor, such as a vapor leaked from a battery. The presence of a vapor may cause the impedance of the sensing layer to change, which may be measured at the contact pads 120.

Operations and processes described herein support combinations of means for performing the specified functions and combinations of operations for performing the specified functions. It will be understood that one or more operations, and combinations of operations, may be implemented by special purpose hardware-based computer systems which perform the specified functions, or combinations of special purpose hardware and computer instructions.

In some example embodiments, certain ones of the operations herein may be modified or further amplified as described below. Moreover, in some embodiments additional optional operations may also be included. It should be appreciated that each of the modifications, optional additions or amplifications described herein may be included with the operations herein either alone or in combination with any others among the features described herein.

The foregoing method and process descriptions are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," and similar words are not intended to limit the order of the steps; these words are simply used to guide the reader through the description of the methods. Further, any reference to claim elements in the singular, for example, using the articles "a," "an" or "the," is not to be construed as limiting the element to the singular and may, in some instances, be construed in the plural.

While various embodiments in accordance with the principles disclosed herein have been shown and described /above, modifications thereof may be made by one skilled in the art without departing from the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above, but is defined by the claims which follow, that scope including all equivalents of the subject matter of the claims. Each and every claim is incorporated as further disclosure into the specification and the claims are embodiment(s) of the present disclosure. Furthermore, any advantages and features described above may relate to specific embodiments but shall not limit the application of such issued claims to processes and structures accomplishing any or all of the above advantages or having any or all of the above features.

In addition, the section headings used herein are provided for consistency with the suggestions under 37 C.F.R. § 1.77 or to otherwise provide organizational cues. These headings shall not limit or characterize the disclosure set out in any claims that may issue from this disclosure. For instance, a description of a technology in the "Background" is not to be construed as an admission that certain technology is prior art to any disclosure in this disclosure. Neither is the "Summary" to be considered as a limiting characterization of the disclosure set forth in issued claims. Furthermore, any reference in this disclosure to "disclosure" or "embodiment" in the singular should not be used to argue that there is only a single point of novelty in this disclosure. Multiple embodiments of the present disclosure may be set forth according to the limitations of the multiple claims issuing from this disclosure, and such claims accordingly define the disclosure, and their equivalents, which are protected thereby. In all instances, the scope of the claims shall be considered on their own merits in light of this disclosure but should not be constrained by the headings set forth herein.

Also, systems, subsystems, apparatuses, techniques, and methods described and illustrated in the various embodiments as discrete or separate may be combined or integrated with other systems, modules, techniques, or methods without departing from the scope of the present disclosure. Other devices or components shown or discussed as coupled to, or in communication with, each other may be indirectly coupled through some intermediate device or component, whether electrically, mechanically, or otherwise. Other examples of changes, substitutions, and alterations are ascertainable by one skilled in the art and could be made without departing from the scope disclosed herein.

Many modifications and other embodiments of the disclosure set forth herein will come to mind to one skilled in the art to which these embodiments pertain having the benefit of teachings presented in the foregoing descriptions and the associated figures. Although the figures only show certain components of the apparatuses and systems described herein, various other components may be used in conjunction with the components and structures disclosed herein. Therefore, it is to be understood that the disclosure is not to be limited to the specific embodiments disclosed and that modifications and other embodiments are intended to be included within the scope of the appended claims. For example, the various elements or components may be combined, rearranged, or integrated in another system or certain features may be omitted or not implemented. Moreover, the steps in any method described above may not necessarily occur in the order depicted in the accompanying drawings, and in some cases one or more of the steps depicted may occur substantially simultaneously, or additional steps may be involved. Although specific terms are employed herein, they are used in a generic and descriptive sense only and not for purposes of limitation.

## Claims

1. An apparatus for detecting a vapor comprising:
a substrate;
a plurality of interdigitated electrodes (IDEs) comprised of a metal disposed proximate to a surface of the substrate; and
a solid polymer electrolyte (SPE) sensing layer disposed proximate to the plurality of IDEs.

2. The apparatus of claim 1, wherein the substrate is comprised of bulk silicon with a thin film of silicon oxide.

3. The apparatus of any of claims 1 or 2, further comprising:
one or more retaining rings defining one or more regions therebetween configured to contain at least a volume of SPE.

4. The apparatus of any of claims 1 to 3, wherein the plurality of IDEs comprises one or more electrodes of a first width, and wherein the one or more electrodes of the first width are spaced from one another by a distance equaling the first width.

5. The apparatus of any of claims 1 to 4, wherein the plurality of IDEs comprises one or more electrodes of a second width, wherein the one or more electrodes of the second width are spaced from one another by a distance equaling the first width, and wherein the first width and the second width are different.

6. The apparatus of any of claims 1 to 5, wherein the plurality of IDEs comprises one or more electrodes that are in electrical connection with one or more buses, wherein the one or more buses are configured to substantially surround at least an area encompassing the one or more electrodes.

7. The apparatus of any of claims 1 to 6, wherein the apparatus is configured to measure, via the plurality of IDEs and the sensing layer, variation in impedance to detect presence of the vapor.

8. A system for detecting a vapor comprising:
a lithium-ion battery; and
a sensor die for detecting a vapor comprising:
a substrate;
a plurality of interdigitated electrodes (IDEs) comprised of a metal disposed proximate to a surface of the substrate; and
a solid polymer electrolyte (SPE) sensing layer disposed proximate to the plurality of IDEs.

9. The system of claim 8, wherein the substrate is comprised of bulk silicon with a thin film of silicon oxide.

10. The system of any of claims 8 or 9, further comprising:
one or more retaining rings defining one or more regions therebetween configured to contain at least a volume of SPE.

11. The system of any of claims 8 to 10, wherein the plurality of IDEs comprises one or more electrodes of a first width, and wherein the one or more electrodes of the first width are spaced from one another by a distance equaling the first width.

12. The system of any of claims 8 to 11, wherein the plurality of IDEs comprises one or more electrodes of a second width, wherein the one or more electrodes of the second width are spaced from one another by a distance equaling the first width, and wherein the first width and the second width are different.

13. The system of any of claims 8 to 12, wherein the plurality of IDEs comprises one or more electrodes that are in electrical connection with one or more buses, wherein the one or more buses are configured to substantially surround at least an area encompassing the one or more electrodes.

14. The system of any of claims 8 to 13, wherein the sensor die is configured to measure, via the plurality of IDEs and the sensing layer, variation in impedance to detect presence of the vapor.

15. A method for constructing an apparatus for detecting a vapor comprising:
depositing a plurality of interdigitated electrodes (IDEs) comprised of a metal onto a surface of a substrate, wherein the substrate is comprised of bulk silicon with a thin film of silicon oxide;
wherein the plurality of IDEs comprises one or more electrodes of a first width, and wherein and the one or more electrodes of the first width are spaced from one another by a distance equaling the first width;
wherein the plurality of IDEs comprises one or more electrodes that are in electrical connection with one or more buses, and wherein the one or more buses are configured to substantially surround at least an area comprising the one or more electrodes;
depositing a sensing layer comprised of solid polymer electrolyte (SPE) proximate to the plurality of IDEs such that the sensing layer covers at least the plurality of IDEs;
fabricating one or more retaining rings defining one or more regions therebetween configured to contain at least a volume of SPE;
configuring a sensor die to measure variation in impedance, via the plurality of IDEs and the sensing layer, to detect presence of the vapor.
